# EUROPEAN PATENT SPECIFICATION

(11) **EP 4 075 453 B1**
(45) Date of publication and mention of the grant of the patent: **11.03.2026**
(21) Application number: 21305481.0
(22) Date of filing: 12.04.2021
(51) Int. Cl.: H01B 7/282, H01B 9/00, H01B 7/14, H01B 7/04

(54) **TWO-LAYER BUCKLING RESISTANT LEAD-FREE WATER BARRIER**
ZWEISCHICHTIGE KNICKBESTÄNDIGE BLEIFREIE WASSERSPERRE
BARRIÈRE D'EAU SANS PLOMB À DEUX COUCHES RÉSISTANT AU FLAMBAGE

(43) Date of publication of application: 19.10.2022
(73) Proprietor: Nexans, 92400 Courbevoie (FR)
(72) Inventor: JOHANSON, Audun, 0653 Oslo (NO); JORGENSEN, Simon, 1655 Sellebakk (NO); MAURI, Massimiliano, 1739 BORGENHAUGEN (NO)
(74) Representative: Acapo Onsagers AS

(56) References cited:
- EP-A1- 2 312 591
- WO-A1-2019/223878
- US-A- 4 454 379
- BADRUL FARAH ET AL: "Preliminary investigation on the correlation between mechanical properties and conductivity of low-density polyethylene/carbon black (LDPE/CB) conductive polymer composite (CPC)", JOURNAL OF PHYSICS: CONFERENCE SERIES, IOP PUBLISHING, BRISTOL, GB, vol. 2169, no. 1, 1 January 2022 (2022-01-01), XP020414476, ISSN: 1742-6588, [retrieved on 20220101], DOI: 10.1088/1742-6596/2169/1/012020

## Description

The present invention relates to a lightweight, lead-free and mechanically reinforced water barrier suited for dynamical submarine power cables.

### Background

The current carrying parts of power cables may need to be kept dry. Intrusion of humidity or water may cause electrical breakdown of the power cable insulation system. The core section of power cables is therefore usually protected by a water barrier arranged radially around the cable core. Up to date, the dominating material in water barriers for power cables is lead since lead has proven to be a reliable and sturdy sheathing material.

Several solutions for insulation systems providing water barriers to submarine power cables are known, but all have various disadvantages that should be overcome. One drawback is that lead is a high-density materiel adding significant weight to the cable. The heavy weight induces extra costs in the entire value chain from production, under transport, storage, deployment, and when the cable is discarded after reaching its lifetime. Another drawback is that lead has a relatively low fatigue resistance making leaden water barriers less suited for dynamical power cables. Furthermore, lead is a rather poisonous material increasingly meeting environmental regulation restrictions. An environmentally friendly replacement of lead as water barrier in power cables is required.

EP 2 312 591 discloses a submarine power cable comprising an electrical conductor surrounded by an insulation. The insulation is surrounded by a metallic moisture barrier. The cable further comprises a semi-conductive adhesive layer surrounding said metallic moisture barrier, and a semi-conductive polymeric jacket able to be in electrical contact with sea water surrounding said semi-conductive adhesive layer.

WO 2019/223878 discloses a power cable comprising an insulated conductor; a copper water barrier, in form of a tube with a welding line, surrounding each insulated conductor; and a polymeric sheath surrounding each copper water barrier. A ratio between the thickness of the copper water barrier and the thickness of the polymeric sheath is 0.15 or less.

### OBJECTIVE OF THE INVENTION

The main objective of the invention is to provide a lightweight, lead-free and mechanically reinforced water barrier suitable for dynamical submarine power cables.

### Summary of the invention

The present invention is defined by the appended claims and in the following.

In a first aspect, the invention relates to a water barrier for surrounding a cable core, wherein the water barrier comprises:
an inner layer of lead-free metal foil having an elastic modulus lower than 210 GPa,
an intermediate layer of adhesive material, and
an outer layer of a polyethylene-based semi-conducting polymer having an elastic modulus higher than 0.5 GPa.

The elastic modulus is measured according to ASTM E111 for metals and to ISO 527-1, -2 for polymers.

The term "layer of metal foil" or "metal foil layer" as used herein, refers to the metal layer acting as the water barrier. The invention is not tied to use of any specific metal/metal alloy of the metal foil. Any metal/metal alloy known to be suited for use in water barriers in power cables by the skilled person may be applied. The metal foil can be welded or otherwise placed so that metal foil forms a waterproof barrier.

The inner layer of lead-free metal foil has a thickness of t₁, the outer layer of a polyethylene-based semi-conducting polymer has a thickness of t₂, and the ratio t₁ : t₂ is at least 0.15.

In another embodiment, the ratio t₁ : t₂ may be at least 0.16, at least 0.17, at least 0.18, at least 0.19, at least 0.20, at least 0.30, at least 0.40, at least 0.50 or at least 1.00. In another embodiment, the ratio t₁ : t₂ may be between 0.15 and 10.

This difference in thickness combined with the respective elastic modulus (Youngs modulus) of the different layers will allow to obtain the required mechanical reinforcement to make the water barrier fatigue resistant and tolerate the cable being bended without the metal foil layer becoming buckled.

In another embodiment, the layer of lead-free metal foil has an elastic modulus lower than 200 GPa, lower than 190 GPa, lower than 180 GPa, lower than 170 GPa, lower than 160 GPa, or lower than 150 GPa. In another embodiment, the layer of lead-free metal foil has an elastic modulus between 50 GPa and 200 GPa.

In one example embodiment, the metal foil may be either an Al/Al-alloy such as for example pure Al, an AA1xxx series, an AA5xxx series or an AA6xxx series alloy according to the Aluminium Association Standard, or a Cu/Cu-alloy such as for example pure Cu, a CuNi-alloy or a CuNiSi-alloy, or a Fe/Fe-alloy, such for example pure Fe, stainless alloy SS316 or S32750.

In another embodiment, the metal foil may be is pure copper or a copper alloy. In a preferred embodiment, the metal foil may be pure copper, a CuNi- or a CuNiSi-alloy. The term "pure" is used herein to refer to less than 1 weight-% impurities.

In another embodiment, the metal foil (or the metallic tube) may preferably be non-corrugated in order to get a substantially 100% void-free interface between the intermediate layer of adhesive material and said metal foil layer (or said metallic tube).

The thickness, t₁, of the metal foil layer may in an example embodiment be in one of the following ranges from 50 to 1000 µm, preferably from 100 to 700 µm, more preferably from 150 to 500 µm.

The term "layer of adhesive material" or "adhesive layer" as used herein, refers to the intermediate layer acting as an adhesive between the metal foil layer and the outer layer of a semi-conductive polyethylene-based polymer.

In another embodiment, the intermediate layer of adhesive material is a semi-conductive adhesive layer.

In another embodiment, the intermediate layer of adhesive material is a hot melt adhesive layer.

The thickness of the intermediate layer of adhesive material may in an exemplary embodiment be within one of the following ranges; from 100 to 300 µm, preferably from 100 to 250 µm, more preferably from 100 to 200 µm, and most preferably from 100 to 150 µm.

The term "layer of a semi-conductive polyethylene-based polymer" as used herein, refers to the polymer layer laid onto the adhesive layer and metal foil layer and functions as a mechanical reinforcement of the water barrier metal foil layer.

The polyethylene-based polymer may in one example embodiment be made of a low density polyethylene (LDPE), a linear low density polyethylene (LLDPE), a medium density polyethylene (MDPE), or a high density polyethylene (HDPE) constituted of a copolymer of ethylene with one or more polar monomers of acrylic acid, methacrylic acid, glycidyl methacrylate, maleic acid, or maleic anhydride.

Examples of suitable polyethylene-based polymers include, but are not limited to:
copolymer of ethylene and ethyl acrylate or similar acrylates; copolymer of ethylene and ethyl acrylic acid, methacrylic acid or similar; copolymer of ethylene and glycidyl methacrylate or similar epoxy-based monomer such as 1,2-epoxy-1-butene or similar; or copolymer of ethylene and maleic-anhydride, or similar.

The outer layer of a polyethylene-based semi-conducting polymer has an elastic modulus higher than 0.5 GPa. In another embodiment it may have an elastic modulus of least 0.7 GPa. In another embodiment it may have an elastic modulus of at least 0.8 GPa. In another embodiment it may have an elastic modulus of at least 0.9 GPa. In another embodiment it may have an elastic modulus of at least 1.0 GPa. The outer layer of a polyethylene-based semi-conducting polymer according to the present invention may have an elastic modulus between 0.5 GPa and 20 GPa, between 0.5 GPa and 15 GPa or between 0.5 GPa and 10 GPa.

The polyethylene-based polymer may in one exemplary embodiment be made electrically semi-conducting by addition and homogenisation 4 to 40 weight% particulate carbon, silver or aluminum in the polymer mass to enable carrying away capacitive charges.

Examples of suitable particulate carbon include but are not limited to; comminuted petrol coke, comminuted anthracite, comminuted char coal, carbon black, carbon nanotubes, etc.

In another embodiment, the particulate carbon may be carbon black.

The term "semi-conducting" as used herein, refers to middle level of electric conductivity, i.e. an electric conductivity falling between the electric conductivity of an electric conductor and an electric insulator.

The thickness t₂ of the polyethylene-based semi-conducting polymer layer is from 1.5 to 3 mm, and most preferably from 1.5 to 2 mm.

In a second aspect, the invention relates to a power cable comprising the water barrier according to the first aspect of the invention.

In an embodiment of the power cable, the water barrier may be the outermost layer of the cable.

In another embodiment of the power cable, the water barrier may be covered with armouring and/or an outer mantel.

In another aspect, the invention relates to a method of manufacturing a water barrier for surrounding a cable core, the method comprising the steps of:
- providing a layer of lead-free metal foil having an elastic modulus lower than 210 GPa, and a thickness t₁,
- welding said layer around the cable core,
- depositing onto the outer surface of the metal foil layer by extrusion an layer of adhesive material,
- depositing onto the outer surface of the intermediate layer of adhesive material (5) by extrusion a layer of a polyethylene-based semi-conducting polymer having an elastic modulus higher than 0.5 GPa, and a thickness t₂ of from 1.5 to 3 mm.

The ratio t₁ : t₂ is at least 0.15.

In another embodiment, the metal foil layer is thoroughly cleaned from grease and dirt before this process.

### Short description of the drawings

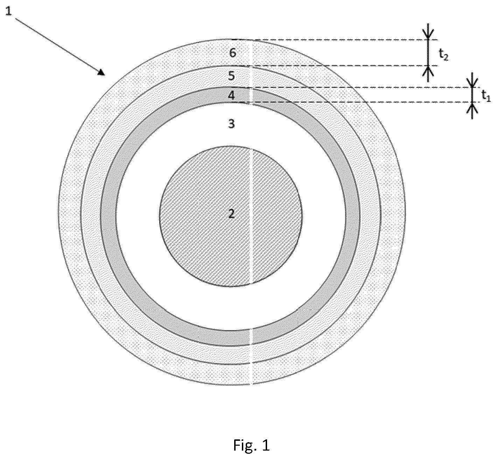

The present invention is described in detail by reference to the following drawings: Fig. 1 is a cross-sectional view of a schematic illustration of an embodiment of the lead-free buckling resistant water barrier around an insulated electrical conductor.

### Detailed description of the invention

High-voltage subsea power cables operating with highest continuous voltage (Um) over 72.5 kV are required to be dry, and they are usually sheathed with a lead water-barrier at Um > 36 kV as recommended by IEC 60840. Lead sheathing has been under scrutiny because of the negative impact of lead on the environment and will most likely be banned in the future. This means that alternative solutions need to be developed.

The use of a lead-free metal and polyethylene laminate as water barrier has been evaluated as an alternative solution. A challenge associated with water barriers of stiffer materials such as welded copper is reduced buckling resistance under bending.

Use of a water barrier according to the present invention in a dry high voltage subsea power cable 1 is illustrated in figure 1. An electrical conductor 2 is surrounded by an insulation system 3. Said electrical conductor 2 and insulation system 3 are known in the art. Around this isolated cable conductor 2-3, an inner layer of metal foil 4 having a thickness of t₁ is arranged and welded.

Around the inner layer of metal foil 4, an intermediate layer of adhesive material 5 is arranged to ensure adhesion of an outer layer of a polyethylene-based polymer 6 having a thickness of t₂ to the metal foil layer.

Figure 1 is a schematic illustration of an embodiment of the lead-free buckling resistant water barrier around an insulated electrical conductor. The thickness of the layers represented therein is not representative.

The assembled inner layer of metal foil 4, intermediate layer of adhesive material 5 and outer layer of a polyethylene-based polymer 6 form the water barrier of the present invention.

### The metal foil layer 4

The metal foil layer 4 according to the present invention can have a thickness needed to meet electrical property requirements and fatigue resistance according to the invention.

The metal foil layer 4 according to the present invention can have an elastic modulus lower than 210 GPa, preferably lower than 150 GPa.

The metal foil layer 4 is formed from a conducting lead-free metal, preferably a copper, steel or aluminum alloy. The lead-free metal is preferably readily weldable. In an exemplary embodiment, the metal foil is an Al/Al-alloy such as for example an AA1xxx series, an AA5xxx series or an AA6xxx series alloy according to the Aluminium Association Standard, or a Cu/Cu-alloy such as for example pure Cu, a CuNi-alloy or a CuNiSi-alloy, or a Fe/Fe-alloy, for example stainless alloy SS316 or S32750.

The most preferred metal foil 4 is made of copper, preferably pure Cu or a CuNiSi-alloy.

The most preferred design of the metal foil layer 4 is a tube, so that the metal foil layer 4 is preferably a metallic tube.

The metal foil layer 4 may be obtained from a strip of metal, which can be wrapped around the insulation of the electrical conductor. Then the metallic strip may be longitudinally welded to form an exogenous or autogenously welded metallic tube. The diameter of the welded sheath may thereby be reduced by either drawing or rolling.

The metal foil 4 (or the metallic tube) may preferably be non-corrugated to obtain a substantially 100% void-free interface between the semi-conductive adhesive layer 5 and said metal foil layer 4 (or said metallic tube).

The thickness, t₁, of the metal foil layer 4 may in an exemplary embodiment be in one of the following ranges; from 50 to 1000 µm, preferably from 100 to 700 µm, more preferably from 150 to 500 µm.

### The semi-conductive adhesive layer 5

In the present application, the generic term "polymer" is intended to encompass both "homopolymer" and "copolymer".

The semi-conducting adhesive layer 5 provides excellent electrical contact between the metallic moisture barrier and the semi-conductive polymeric jacket. The semi-conducting adhesive layer 5 can be made from a composition comprising:
- an organic polymer, being preferably easily extrudable, as similar chemical nature as the polymer material of the semi-conductive polymeric jacket, said organic polymer being modified (e.g. grafted) with a monomer with a reactive carboxyl group, such as acrylic acid or acrylic acid ester, and
- a semi-conducting filler in a sufficient loading to render said layer semi-conductive, such as by example a loading from 4 to 30% by weight of the composition.

Said composition can further comprise at least one additive selected among protecting agents against aging phenomena; metal deactivators; adhesion promoters; tackifiers; process aids such as lubricants; coupling agents; and flame-retardant fillers; or one of their mixtures.

Said organic polymer can typically be a thermoplastic or an elastomeric polymer material such as, for example, a polyolefin, and more particularly an ethylene based polymer.

The semi-conductive filler can be silver, aluminium or carbon filler, and more particularly carbon black filler.

The protecting agent (or combination of protecting agents) may include antioxidants well-known in the art. By way of example, one cites sterically hindered phenols, especially sterically hindered phenols acting as metal deactivators like Irganox MD 1024 commercialized by Ciba Specialty Chemicals, phosphonite- or phosphite-based antioxidants like Irgafos 168 commercialized by Ciba Specialty Chemicals and amine-based antioxidants such as polymerized 2,2,4-trimethyl-1,2 dihydroquinoline (TMQ).

The preferred semi-conductive adhesive layer 5 is a semi-conductive hot melt adhesive layer. Well-known semi-conductive hot melt adhesive materials, which can be used in the invention, can be for example the reference N 2910 BG commercialized by Nexans France.

Other hot melt adhesive materials, which are not semi-conductive as such, can be either added to one which is semi-conductive, or mixed as such with semi-conductive filler. Said hot melt adhesive materials which are not semi-conductive can be one of the following brands: Yparex (a maleic anhydride modified polyethylene) commercialized by DSM; Fusabond (an anhydride modified polyethylene) commercialized by Dupont; Orevac (an ethylene vinyl acetate based terpolymer) or Lotader (an ethylene acrylate based terpolymer) commercialized by Arkema.

Furthermore, the semi-conductive adhesive layer can advantageously be not cross-linked.

Testing of the adhesion of the semi-conductive polymeric layer 6 onto the metal foil layer 4 may be conducted according to IEC62067. To be sufficient, the peeling strength shall be more than 0.5 N/mm according to IEC62067.

### The semi-conductive polymeric jacket 6

The semi-conductive polymeric jacket or layer 6 is typically any polyethylene-based polymer used in electrical insulation applications. The polyethylene-based polymer is preferably easily extrudable. The polyethylene-based polymer has been rendered semi-conductive by incorporation of an electrically semi-conductive filler.

The polyethylene-based polymer may in one example embodiment be either a low density polyethylene (LDPE), a linear low density polyethylene (LLDPE), a medium density polyethylene (MDPE), or a high density polyethylene (HDPE) constituted of a copolymer of ethylene with one or more polar monomers of acrylic acid, methacrylic acid, glycidyl methacrylate, maleic acid, or maleic anhydride or any combination thereof.

Examples of suitable polyethylene-based polymers include, but are not limited to:
- copolymer of ethylene and ethyl acrylate or similar acrylates;
- copolymer of ethylene and ethyl acrylic acid, methacrylic acid or similar;
- copolymer of ethylene and glycidyl methacrylate or similar epoxy-based monomer such as 1,2-epoxy-1-butene or similar; or
- copolymer of ethylene and maleic-anhydride, or similar.

The outer layer of a polyethylene-based semi-conducting polymer 6 according to the present invention has an elastic modulus higher than 0.5 GPa, at least 0.7 GPa, at least 0.8 GPa, at least 0.9 GPa, or at least 1.0 GPa. The outer layer of a polyethylene-based semi-conducting polymer 6 according to the present invention may have an elastic modulus between 0.5 GPa and 20 GPa.

The polyethylene-based polymer may in one example embodiment be made electrically semi-conducting by addition and homogenisation of 4 to 40 weight% particulate carbon, silver or aluminium in the polymer mass to enable carrying away capacitive charges.

Examples of suited particulate carbon includes but is not limited to: comminuted petrol coke, comminuted anthracite, comminuted char coal, carbon black, carbon nanotubes, etc.

The preferred semi-conductive polymer layer 6 has incorporated therein a loading of carbon black from 4 to 30% by weight of the composition.

According to a particular embodiment of the invention, the semi-conductive polymeric layer 6 can be the outermost layer of the cable.

Furthermore, the semi-conductive polymeric layer 6 may be not cross-linked.

### Outer layer

The submarine power cable comprising the water barrier according to the invention may also comprise an additional outer layer. The outer layer may for example be an armouring layer or an outer mantel.

## Claims

1. A water barrier for surrounding a cable core, wherein the water barrier comprises:
an inner layer of lead-free metal foil (4) having an elastic modulus lower than 210 GPa,
an intermediate layer of adhesive material (5), and
an outer layer of a polyethylene-based semi-conducting polymer (6) having
an elastic modulus higher than 0.5 GPa,
wherein the inner layer of lead-free metal foil has a thickness of t₁ and the outer layer of a polyethylene-based semi-conducting polymer has a thickness of t₂, wherein the thickness t₂ of the outer layer (6) is from 1.5 to 3 mm and
wherein the ratio t₁ : t₂ is at least 0.15.

2. The water barrier according to claim 1, wherein the metal foil (4) has an elastic modulus lower than 150 GPa.

3. The water barrier according to any of the previous claims, wherein the metal foil layer (4) is non-corrugated.

4. The water barrier according to any of the previous claims, wherein the thickness t₁ of the metal foil (4) is from 50 to 1000 µm, preferably from 100 to 700 µm, more preferably from 150 to 500 µm.

5. The water barrier according to any of the previous claims, wherein the metal foil (4) is either:
aluminium,
an aluminium alloy of the AA1xxx series, AA5xxx series or the AA6xxx series according to the Aluminium Association Standard,
copper
a copper-alloy
a CuNi-alloy
a CuNiSi-alloy age hardened to T6,
iron
a Fe-alloy
stainless steel alloy SS316
or
stainless steel alloy S32750.

6. The water barrier according to any of the previous claims, wherein the metal foil (4) is pure copper or a Cu-alloy, preferably pure copper, CuNi- or a CuNiSi-alloy.

7. The water barrier according to any of the previous claim, wherein the intermediate layer of adhesive material (5) is a hot melt adhesive layer.

8. The water barrier according to any of the previous claims, wherein the intermediate layer of adhesive material has a thickness of from 100 to 300 µm, preferably from 100 to 250 µm, more preferably from 100 to 200 µm, and most preferably from 100 to 150 µm.

9. The water barrier according to any of the previous claims, wherein the polyethylene-based semi-conducting polymer (6) is a polymer selected from: a low density polyethylene (LDPE), a linear low density polyethylene (LLDPE), a medium density polyethylene (MDPE), or a high density polyethylene (HDPE) constituted of a copolymer of ethylene with one or more polar monomers of acrylic acid, methacrylic acid, glycidyl methacrylate, maleic acid, or maleic anhydride or any combination thereof.

10. The water barrier according to any of the previous claim, wherein the polyethylene-based semi-conducting polymer (6) has an elastic modulus of at least 0.5 GPa, preferably at least 0.7 GPa, more preferably at least 0.8 GPa, more preferably at least 0.9 GPa, and most preferably at least 1.0 GPa.

11. The water barrier according to any of the previous claims, wherein the polyethylene-based semi-conducting polymer comprises 4 to 40 weight% particulate carbon, silver or aluminium.

12. The water barrier according to any of the previous claims, wherein the thickness t₂ of the outer layer (6) is from 1.5 to 2 mm.

13. A power cable comprising the water barrier according to any of the previous claims, the water barrier surrounding a cable core of said power cable.

14. A method of manufacturing a water barrier for surrounding a cable core, the method comprising the steps of:
a) providing a layer of lead-free metal foil (4) having an elastic modulus lower than 210 GPa, and a thickness of t₁,
b) welding said layer around the cable core,
c) depositing onto the outer surface of the metal foil layer (4) by extrusion a layer of adhesive material (5),
d) depositing onto the outer surface of the intermediate layer of adhesive material (5) by extrusion a layer of a polyethylene-based semi-conducting polymer (6) having an elastic modulus higher than 0.5 GPa, and a thickness of t₂,
wherein the ratio t₁ : t₂ is at least 0.15 and
wherein the thickness t₂ of the outer layer (6) is from 1.5 to 3 mm.

## Patentansprüche

1. Wassersperre zum Umgeben einer Kabelseele, wobei die Wassersperre Folgendes umfasst:
eine innere Schicht aus bleifreier Metallfolie (4) mit einem Elastizitätsmodul von weniger als 210 GPa,
eine Zwischenschicht aus Klebematerial (5) und
eine äußere Schicht aus einem halbleitenden Polymer (6) auf Polyethylenbasis mit einem Elastizitätsmodul von mehr als 0,5 GPa,
wobei die innere Schicht aus bleifreier Metallfolie eine Dicke von t₁ und die äußere Schicht aus einem halbleitenden Polymer auf Polyethylenbasis eine Dicke von t₂ aufweist, wobei die Dicke t₂ der äußeren Schicht (6) 1,5 bis 3 mm beträgt und wobei das Verhältnis t₁: t₂ zumindest 0,15 beträgt.

2. Wassersperre nach Anspruch 1, wobei die Metallfolie (4) einen Elastizitätsmodul von weniger als 150 GPa aufweist.

3. Wassersperre nach einem der vorhergehenden Ansprüche, wobei die Metallfolienschicht (4) nicht gewellt ist.

4. Wassersperre nach einem der vorhergehenden Ansprüche, wobei die Dicke t₁ der Metallfolie (4) von 50 bis 1000 µm, bevorzugt von 100 bis 700 µm, besonders bevorzugt von 150 bis 500 µm beträgt.

5. Wassersperre nach einem der vorhergehenden Ansprüche, wobei die Metallfolie (4) entweder:
Aluminium,
eine Aluminiumlegierung der AA1xxx-Serie, AA5xxx-Serie oder der AA6xxx-Serie nach dem Aluminium Association Standard,
Kupfer
eine Kupferlegierung
eine CuNi-Legierung
eine CuNiSi-Legierung, auf T6 ausgehärtet,
Eisen
eine Fe-Legierung
Edelstahllegierung SS316
oder
Edelstahllegierung S32750 ist.

6. Wassersperre nach einem der vorhergehenden Ansprüche, wobei die Metallfolie (4) Reinkupfer oder eine Cu-Legierung, bevorzugt Reinkupfer, CuNi- oder eine CuNiSi-Legierung ist.

7. Wassersperre nach einem der vorhergehenden Ansprüche, wobei die Zwischenschicht aus Klebematerial (5) eine Hot-Melt-Klebeschicht ist.

8. Wassersperre nach einem der vorhergehenden Ansprüche, wobei die Zwischenschicht aus Klebstoffmaterial eine Dicke von 100 bis 300 µm, bevorzugt von 100 bis 250 µm, besonders bevorzugt von 100 bis 200 µm und am meisten bevorzugt von 100 bis 150 µm aufweist.

9. Wassersperre nach einem der vorhergehenden Ansprüche, wobei das halbleitende Polymer (6) auf Polyethylenbasis ein Polymer ist, das ausgewählt ist aus: einem Polyethylen niedriger Dichte (LDPE), einem linearen Polyethylen niedriger Dichte (LLDPE), einem Polyethylen mittlerer Dichte (MDPE) oder einem Polyethylen hoher Dichte (HDPE), das aus einem Copolymer von Ethylen mit einem oder mehreren polaren Monomeren von Acrylsäure, Methacrylsäure, Glycidylmethacrylat, Maleinsäure oder Maleinsäureanhydrid oder einer beliebigen Kombination davon besteht.

10. Wassersperre nach einem der vorhergehenden Ansprüche, wobei das halbleitende Polymer (6) auf Polyethylenbasis einen Elastizitätsmodul von zumindest 0,5 GPa, bevorzugt zumindest 0,7 GPa, besonders bevorzugt zumindest 0,8 GPa, besonders bevorzugt zumindest 0,9 GPa und am meisten bevorzugt zumindest 1,0 GPa aufweist.

11. Wassersperre nach einem der vorhergehenden Ansprüche, wobei das halbleitende Polymer auf Polyethylenbasis 4 bis 40 Gew.-% teilchenförmigen Kohlenstoff, Silber oder Aluminium umfasst.

12. Wassersperre nach einem der vorhergehenden Ansprüche, wobei die Dicke t₂ der äußeren Schicht (6) von 1,5 bis 2 mm beträgt.

13. Stromkabel, umfassend die Wassersperre nach einem der vorhergehenden Ansprüche, wobei die Wassersperre eine Kabelseele des Stromkabels umgibt.

14. Verfahren zum Herstellen einer Wassersperre zum Umgeben einer Kabelseele, wobei das Verfahren die folgenden Schritte umfasst:
a) Bereitstellen einer Schicht aus bleifreier Metallfolie (4) mit einem Elastizitätsmodul von weniger als 210 GPa und einer Dicke von t₁,
b) Schweißen der Schicht um die Kabelseele,
c) Abscheiden, auf der Außenfläche der Metallfolienschicht (4) durch Extrusion, einer Schicht aus Klebematerial (5),
d) Abscheiden, auf die äußere Oberfläche der Zwischenschicht aus Klebematerial (5) durch Extrusion, einer Schicht aus einem halbleitenden Polymer (6) auf Polyethylenbasis
mit einem Elastizitätsmodul von mehr als 0,5 GPa und einer Dicke von t₂, wobei das Verhältnis t₁: t₂ zumindest 0,15 beträgt und
wobei die Dicke t₂ der äußeren Schicht (6) von 1,5 bis 3 mm beträgt.

## Revendications

1. Barrière à l'eau destiné à entourer une âme de câble, ladite barrière à l'eau comprenant :
une couche interne de feuille métallique sans plomb (4) possédant un module d'élasticité inférieur à 210 GPa,
une couche intermédiaire de matériau adhésif (5), et
une couche externe d'un polymère semi-conducteur à base de polyéthylène (6) possédant un module d'élasticité supérieur à 0,5 GPa,
ladite couche interne de feuille métallique sans plomb possédant une épaisseur t₁ et ladite couche externe d'un polymère semi-conducteur à base de polyéthylène possédant une épaisseur t₂, ladite épaisseur t₂ de la couche externe (6) allant de 1,5 à 3 mm et ledit rapport t₁:t₂ étant supérieur ou égal à 0,15.

2. Barrière à l'eau selon la revendication 1, ladite feuille métallique (4) possédant un module d'élasticité inférieur à 150 GPa.

3. Barrière à l'eau selon l'une quelconque des revendications précédentes, ladite couche de feuille métallique (4) étant non ondulée.

4. Barrière à l'eau selon l'une quelconque des revendications précédentes, ladite épaisseur t₁ de la feuille métallique (4) allant de 50 à 1000 µm, de préférence allant de 100 à 700 µm, mieux encore allant de 150 à 500 µm.

5. Barrière à l'eau selon l'une quelconque des revendications précédentes, ladite feuille métallique (4) étant constituée d'un parmi :
l'aluminium,
un alliage d'aluminium de la série AA1xxx, de la série AA5xxx ou de la série AA6xxx selon la norme de l'Aluminium Association,
le cuivre
un alliage de cuivre
un alliage CuNi
un alliage CuNiSi durci par vieillissement à T6,
le fer
un alliage de Fe
un alliage d'acier inoxydable SS316
ou
un alliage d'acier inoxydable S32750.

6. Barrière à l'eau selon l'une quelconque des revendications précédentes, ladite feuille métallique (4) étant du cuivre pur ou un alliage de Cu, de préférence du cuivre pur, un alliage CuNi ou CuNiSi.

7. Barrière à l'eau selon l'une quelconque des revendications précédentes, ladite couche intermédiaire de matériau adhésif (5) étant une couche d'adhésif thermofusible.

8. Barrière à l'eau selon l'une quelconque des revendications précédentes, ladite couche intermédiaire de matériau adhésif présentant une épaisseur allant de 100 à 300 µm, de préférence allant de 100 à 250 µm, mieux encore allant de 100 à 200 µm, et idéalement allant de 100 à 150 µm.

9. Barrière à l'eau selon l'une quelconque des revendications précédentes, ledit polymère semi-conducteur à base de polyéthylène (6) étant un polymère choisi parmi : un polyéthylène basse densité (LDPE), un polyéthylène linéaire basse densité (LLDPE), un polyéthylène moyenne densité (MDPE) ou un polyéthylène haute densité (HDPE) constitué d'un copolymère d'éthylène avec un ou plusieurs monomères polaires d'acide acrylique, d'acide méthacrylique, de méthacrylate de glycidyle, d'acide maléique ou d'anhydride maléique ou une combinaison quelconque de ceux-ci.

10. Barrière à l'eau selon l'une quelconque des revendications précédentes, ledit polymère semi-conducteur à base de polyéthylène (6) possédant un module d'élasticité supérieur ou égal à 0,5 GPa, de préférence supérieur ou égal à 0,7 GPa, mieux encore supérieur ou égal à 0,8 GPa, mieux encore supérieur ou égal à 0,9 GPa, et idéalement supérieur ou égal à 1,0 GPa.

11. Barrière à l'eau selon l'une quelconque des revendications précédentes, ledit polymère semi-conducteur à base de polyéthylène comprenant 4 à 40 % en poids de particules de carbone, d'argent ou d'aluminium.

12. Barrière à l'eau selon l'une quelconque des revendications précédentes, ladite épaisseur t₂ de la couche externe (6) allant de 1,5 à 2 mm.

13. Câble d'alimentation comprenant la barrière à l'eau selon l'une quelconque des revendications précédentes, la barrière à l'eau entourant une âme de câble dudit câble d'alimentation.

14. Procédé de fabrication d'une barrière à l'eau pour entourer une âme de câble, le procédé comprenant les étapes de :
a) fourniture d'une couche de feuille métallique sans plomb (4) possédant un module d'élasticité inférieur à 210 GPa et une épaisseur t₁,
b) soudage de ladite couche autour de l'âme de câble,
c) dépôt sur la surface externe de la couche de feuille métallique (4) par extrusion d'une couche de matériau adhésif (5),
d) dépôt sur la surface externe de la couche intermédiaire de matériau adhésif (5) par extrusion d'une couche d'un polymère semi-conducteur à base de polyéthylène (6) possédant un module d'élasticité supérieur à 0,5 GPa et une épaisseur t₂, ledit rapport t₁:t₂ étant supérieur ou égal à 0,15 et
ladite épaisseur t₂ de la couche externe (6) allant de 1,5 à 3 mm.
